**Europäisches Patentamt**

**European Patent Office**

**Office européen des brevets**

(11) Veröffentlichungsnummer: **0 355 459 B1**

(12) **EUROPÄISCHE PATENTSCHRIFT**

(45) Veröffentlichungstag der Patentschrift: **05.05.93**

(21) Anmeldenummer: **89113848.9**

(22) Anmeldetag: **27.07.89**

(51) Int. Cl.⁵: **C09J 183/07**

(54) Verwendung von zu Elastomeren härtbaren Organopolysiloxanmassen als Klebstoffe.

(30) Priorität: **28.07.88 DE 3825676**

(43) Veröffentlichungstag der Anmeldung:
**28.02.90 Patentblatt 90/09**

(45) Bekanntmachung des Hinweises auf die
Patenterteilung:
**05.05.93 Patentblatt 93/18**

(84) Benannte Vertragsstaaten:
**AT BE DE ES FR GB IT NL SE**

(56) Entgegenhaltungen:
**EP−A− 0 100 873**
**EP−A− 0 377 185**
**FR−A− 2 453 197**
**US−A− 4 587 137**

(73) Patentinhaber: **WACKER−CHEMIE GMBH**
**Hanns−Seidel−Platz 4**
**W−8000 München 83(DE)**

(72) Erfinder: **Wolfer, Dietrich, Dr., Dipl.−Chem.**
**Untereching 88**
**A−5110 Oberndorf(AT)**
Erfinder: **Marsch, Wilhelm**
**Moosen 39**
**W−8261 Haiming(DE)**

**Beschreibung**

Die vorliegende Erfindung betrifft die Verwendung von zu Elastomeren härtbaren Organopolysiloxanmassen als Klebstoffe.

Als Klebstoffe zum Verbinden von Silikonkautschukteilen bzw. -profilen miteinander werden bisher bei Raumtemperatur an Luft härtende Organopolysiloxanmassen eingesetzt. Die Aushärtezeit beträgt dabei mehrere Stunden und die Kleber weisen eine geringe mechanische Festigkeit auf.

Aus GB-B 2 049 717 (ausgegeben am 3. August 1983, W. J. Bobear, General Electric Company) sind Inhibitor-haltige, Platin-katalysierte Silikonkautschukmassen für die Heißluft-Vulkanisation bekannt, die als Bestandteile

(a) Si-gebundene Vinylgruppen aufweisendes Organopolysiloxan

(b) Si-gebundenen Wasserstoff aufweisendes Organopolysiloxan

(c) Platinkatalysator

(d) Inhibitor mit einem Rest der Formel $-C-O-O-H$ und

(e) organisches Peroxid mit der Gruppierung $-C-O-O-C-$ im Molekül

enthalten. Das organische Peroxid (e) wird als Härtungsbeschleuniger den Massen zugesetzt, da der Hydroperoxy-Inhibitor (d) ansonsten in diesen Massen so wirksam ist, daß die Massen erst beim längeren als für die Heißluft-Vulkanisation erwünschten Erhitzen auf etwa 540°C härten. Der Zusatz des organischen Peroxids gestattet dann eine Härtung der Massen bei 370°C.

In EP-A 100 873 sind additionsvernetzende, in der Wärme vulkanisierende Polysiloxankautschukmischungen beschrieben, die

(a) Si-gebundene Vinylgruppen aufweisendes Organopolysiloxan

(b) Si-gebundenen Wasserstoff aufweisendes Organopolysiloxan

(c) Platinkatalysator und

(d) Inhibitorsystem, bestehend aus einem organischen Peroxid, wie Dichlorbenzoylperoxid, und einer oder mehreren als Komplexliganden für Platin geeigneten Verbindung, wie Triallylcyanurat,

enthalten.

Es bestand die Aufgabe zu Elastomeren härtbare Organopolysiloxanmassen als Klebstoffe bereitzustellen, mit denen mindestens zwei gleichartige oder verschiedenartige Organopolysiloxanelastomere miteinander verbunden werden können, wobei es sich um alle gängigen Organopolysiloxanelastomere handeln kann, mit denen alle gängigen Organopolysiloxanelastomere mit gegebenfalls grundierten Unterlagen verbunden werden können, bei denen die Zeit für die Aushärtung des Klebstoffs besonders kurz ist, bei denen die Klebstoffe hohe mechanische Festigkeit aufweisen und mit denen die Klebstoffstellen möglichst wenig sichtbar sind. Diese Aufgabe wird durch die Erfindung gelöst.

Gegenstand der Erfindung ist die Verwendung von zu Elastomeren härtbaren Organopolysiloxanmassen als Klebstoffe, dadurch gekennzeichnet, daß sie als wesentliche Bestandteile

(a) Si-gebundene Vinylgruppen aufweisendes Organopolysiloxan,

(b) Si-gebundenen Wasserstoff aufweisendes Organopolysiloxan,

(c) die Anlagerung von Si-gebundenem Wasserstoff an Vinylgruppen förderndem Platinkatalysator,

(d) Inhibitor, der die Anlagerung von Si-gebundenem Wasserstoff an Vinylgruppen bei Raumtemperatur verzögert, mit der Maßgabe, daß Inhibitoren mit einem Hydroperoxy-Rest ausgeschlossen sind, und

(e) organisches Peroxid mit der Maßgabe, daß Acylperoxide ausgeschlossen sind

enthalten.

Die GB-B 2 049 717 erwähnt nicht die Verwendung der Inhibitor-haltigen, Platin-katalysierten Silikonkautschukmassen als Klebstoffe und konnte ihre Verwendung als Klebstoffe auch nicht nahelegen bzw. die Massen können für diesen Verwendungszweck auch nicht eingesetzt werden, da die dort beschriebenen Massen erst bei Temperaturen von 370°C härten.

Die Si-gebundenen Vinylgruppen aufweisenden Organopolysiloxane (a) der erfindungsgemäß eingesetzten Massen sind vorzugsweise solche der allgemeinen Formel

$$(CH_2=CH)R_2SiO(R_2^1 SiO)_n SiR_2(CH=CH_2).$$

In dieser Formel bedeutet R eine Methyl-, Ethyl- oder Phenylgruppe, $R^1$ eine Methyl-, Ethyl-, Vinyl- oder Phenylgruppe, mit der Maßgabe, daß jede Vinylgruppe in einer Vinylmethylsiloxan-Einheit vorliegt und mindestens 0,2 Molprozent der Diorganosiloxan-Einheiten ($R_2^1 SiO$) Vinylmethylsiloxan-Einheiten sind, und n bedeutet eine Zahl in einem solchen Wert, daß die Viskosität der Organopolysiloxane 100 bis 1 000 000 mPa.s bei 25°C beträgt. Falls erwünscht, können jedoch in den Triorganosiloxygruppen alle oder ein Teil der Vinylgruppen durch R-Gruppen ersetzt sein.

Durch den Einsatz niederviskoser, Si−gebundene Vinylgruppen aufweisender Organopolysiloxane (a) kann auf organische Lösungsmittel verzichtet werden und es werden dünne Klebstellen erhalten, die nicht sichtbar sind.

In den Si−gebundene Vinylgruppen aufweisenden Organopolysiloxanen (a) der erfindungsgemäß verwendeten Massen sind schon wegen der leichteren Zugänglichkeit mindestens 90 Prozent der Anzahl der anderen organischen Reste als Vinylgruppen Methylgruppen.

Innerhalb und/oder entlang der Siloxankette der oben angegebenen Formel können, was bei derartigen Formeln üblicherweise nicht dargestellt wird, zusätzlich zu den Diorganosiloxan−Einheiten ($R_2^1$ SiO) noch andere Siloxaneinheiten vorliegen. Beispiele für solche anderen, meist nur als Verunreinigungen vorliegenden Siloxaneinheiten sind solche der allgemeinen Formeln $RSiO_{3/2}$, $R_3 SiO_{1/2}$ und $SiO_{4/2}$, wobei R jeweils die oben dafür angegenene Bedeutung hat. Die Menge an solchen anderen Siloxaneinheiten sollte jedoch 5 Molprozent nicht überschreiten.

Si−gebundene Vinylgruppen aufweisende Organopolysiloxane (a) der im Rahmen der Erfindung verwendeten Art und Verfahren zu ihrer Herstellung sind bekannt.

Als Si−gebundenen Wasserstoff aufweisende Organopolysiloxane (b) können auch im Rahmen der Erfindung alle mindestens 3 Si−gebundene Wasserstoffatome je Molekül enthaltende Organopolysiloxane eingesetzt werden, die bisher zur Bereitung von zu Elastomeren härtbaren Massen mit Vinylgruppen aufweisenden Organopolysiloxanen, Si−gebundenen Wasserstoff aufweisenden Organopolysiloxanen und die Anlagerung von Si−gebundenen Wasserstoff an Vinylgruppen fördernden Katalysatoren als wesentlichen Bestandteile eingesetzt werden konnten. In diesen Organopolysiloxanen sind die anders als durch Wasserstoff oder Siloxansauerstoffatome abgesättigten Siliciumvalenzen vorzugsweise durch Methyl−, Ethyl− oder Phenylreste oder ein Gemisch aus mindestens zwei solcher Kohlenwasserstoffreste abgesättigt. Weiterhin ist bevorzugt, daß an jedes Siliciumatom, an das ein Wasserstoffatom gebunden ist, auch einer der vorstehend genannten bevorzugten Kohlenwasserstoffreste gebunden ist.

Besonders bevorzugt als Organopolysiloxane (b) mit mindestens 3 Si−gebundenen Wasserstoffatomen je Molekül sind solche der Formel

$$R^2(CH_3)_2 SiO(SiR_2^2 O)_p Si(CH_3)_2 R^2 \ ,$$

wobei $R^2$ Wasserstoff oder den Methyl−, Ethyl− oder Phenylrest bedeutet und p eine ganze Zahl mit einem solchen Wert ist, daß die Viskosität des Organopolysiloxans 15 bis 1000 mPa.s bei 25 °C beträgt, mit der Maßgabe, daß an ein Siliciumatom nur ein Wasserstoffatom gebunden ist und daß das Verhältnis von $SiR_2^2$ O−Einheiten, in denen beide $R^2$ Kohlenwasserstoffreste sind, zu den Einheiten mit Si− gebundenem Wasserstoff 1: 1 bis 20 : 1 ist. Vorzugsweise bedeutet auch $R^2$ einen Methylrest, wenn es nicht Wasserstoff ist.

Derartige Si−gebundenen Wasserstoff aufweisende Organopolysiloxane (b) sind ebenfalls allgemein bekannt und im Handel erhältlich.

Die Si−gebundenen Wasserstoff aufweisenden Organopolysiloxane (b) werden vorzugsweise in solchen Mengen verwendet, daß 1,2 bis 4, insbesondere 1,5 bis 2, Grammatom Si−gebundener Wasserstoff je Grammol Vinylgruppe in den Si−gebundene Vinylgruppen aufweisenden Organopolysiloxanen (a) vorliegen.

Als die Anlagerung von Si−gebundenen Wasserstoff an Vinylgruppen fördernde Platinkatalysatoren (c) können ebenfalls auch im Rahmen der Erfindung alle die Anlagerung von Si−gebundenen Wassserstoff an Vinylgruppen fördernde Platinkatalysatoren eingesetzt werden, die bisher zur Bereitung von zu Elastomeren härtbaren Massen mit Vinylgruppen aufweisenden Organopolysiloxanen, Si−gebundenen Wasserstoff aufweisenden Organopolysiloxanen und die Anlagerung von Si−gebundenem Wasserstoff an Vinylgruppen fördernden Platinkatalysatoren als wesentlichen Bestandteilen eingesetzt werden konnten. Beispiele für solche Platinkatalysatoren sind Platinverbindungen wie Hexachloroplatinsäure und Platinkomplexe wie Platin−Olefin−Komplexe, z.B. solche mit Ethylen, Propylen, Butadien, Cyclopenten oder Cyclohexen, Platin−Alkohol−Komplexe, Platin−Ether−Komplexe, Platin−Aldehyd−Komplexe, Umsetzungsprodukte aus $H_2PtCl_4$ . 6 $H_2O$ und Monoketonen, sowie Platin−Vinylsiloxan−Komplexe, z.B. Platin−1,3−Divinyl− 1,1,3,3−tetramethyldisiloxan−Komplexe mit oder ohne Gehalt an nachweisbarem anorganischem Halogen.

Bevorzugt als Platinkatalysatoren (c) werden bei den erfindungsgemäß eingesetzten Massen Hexachloroplatinsäure und Platin−1,3−Divinyl−1,1,3,3−tetramethyldisiloxan−Komplexe verwendet.

Vorzugsweise wird Platinkatalysator (c) in Mengen von 0,5 bis 100 Gewichts−ppm, insbesondere 5 bis 20 Gewichts−ppm, berechnet als elementares Platin und bezogen auf das Gesamtgewicht der Organopolysiloxane (a) und (b), eingesetzt.

Als Inhibitoren (d), die die Anlagerung von Si−gebundenem Wasserstoff an Vinylgruppen bei Raumtemperatur verzögern, können auch bei den erfindungsgemäßen Massen alle Inhibitoren, die die Anlagerung von Si − gebundenem Wasserstoff an Vinylgruppen bei Raumtemperatur verzögern, verwendet werden, die auch bisher für den gleichen Zweck verwendet werden konnten mit der Maßgabe, daß Inhibitoren mit einem Hydroperoxy − Rest ausgeschlossen sind. Beispiele für Inhibitoren (d) sind 1,3 − Divinyl − 1,1,3,3 − tetramethyldisiloxan, Benzotriazol, Dialkylformamide, Alkylthioharnstoffe, Methylethylketoxim und organische oder silicoorganische Verbindungen mit einem Siedepunkt von mindestens 25 °C bei 1012 mbar (abs.) und mindestens einer aliphatischen Dreifachbindung, wie Ethinylcyclohexanol und 2 − Methyl − 3 − butinol − 2. Bevorzugt werden als Inhibitoren (d) organische oder silicoorganische Verbindungen mit einem Siedepunkt von mindestens 25 °C bei 1012 mbar (abs.) und mindestens einer aliphatischen Dreifachbindung verwendet. Besonders bevorzugt wird als Inhibitor (d) Ethinylcyclohexanol verwendet.

Vorzugsweise wird Inhibitor (d) in Mengen von 0,05 bis 0,1 Gewichts − %, bezogen auf das Gesamtge − wicht der Organopolysiloxane (a) und (b), eingesetzt.

Als organische Peroxide (e) können bei den erfindungsgemäß eingesetzten Massen solche eingesetzt werden mit denen auch bisher Organopolysiloxanmassen zu Elastomeren gehärtet werden konnten, mit der Maßgabe, daß Acylperoxide ausgeschlossen sind. Acylperoxide sind solche, welche eine Acylgruppe besitzen wie in Benzoylperoxid und 2,4 − Dichlorobenzoylperoxid. Beispiele für bei den erfindungsgemäßen Massen verwendete organische Peroxide sind Alkylperoxide und Arylperoxide, wie Di − tert. − butyl − peroxid und Dicumylperoxid; und Perketale, wie 2,5 − Dimethyl − 2,5 − di(tert. − butylperoxy)hexan und 2,5 − Dimethyl − 2,5 − di(t − butylperoxy)hexen. Besonders bevorzugt wird als organisches Peroxid (e) Dicumylp − eroxid und 2,5 − Dimethyl − 2,5 − di(t − butylperoxy)hexan verwendet.

Vorzugsweise wird organisches Peroxid (e) in Mengen von 0,3 bis 2 Gewichts − %, bezogen auf das Gesamtgewicht an Organopolysiloxane (a) und (b), eingesetzt.

Die erfindungsgemäß verwendeten Massen können zusätzlich zu den Bestandteilen (a) bis (e) bei der Bereitung von zu Elastomeren härtbaren Massen auf Grundlage von Organopolysiloxanen herkömmlicher − weise mitverwendete Stoffe als weitere Bestandteile enthalten. Diese Stoffe dürfen natürlich weder Gifte für die Anlagerung von Si − gebundenem Wasserstoff an Vinylgruppen fördernden Platinkatalysatoren sein, noch dürfen sie die Festigkeit der Verklebung beeinträchtigen. Beispiele für geeignete weitere Bestandteile sind insbesondere verstärkende Füllstoffe, nicht verstärkende Füllstoffe, flammabweisend machende Mittel, Pigmente, lösliche Farbstoffe und Weichmacher, wie flüssige durch Trimethylsiloxygruppen endblockierte Dimethylpolysiloxane.

Beispiele für verstärkende Füllstoffe, also für Füllstoffe mit einer BET − Oberfläche von mindestens 50 $m^2/g$, sind pyrogen erzeugtes Siliciumdioxid, unter Erhaltung der Struktur entwässerte Kieselsäurehydrogele und gefälltes Siliciumdioxid mit einer BET − Oberfläche von mindestens 50 $m^2/g$. Beispiele für nichtver − stärkende Füllstoffe, also für Füllstoffe mit einer BET − Oberfläche von weniger als 50 $m^2/g$, sind Diato − meenerde, Quarzmehl, Calciumsilikat, Zirkoniumsilikat, Zeolithe, Metalloxidpulver, wie Aluminium − , Titan − , Eisen − oder Zinkoxide, Bariumsulfat, Calciumcarbonat und Gips. Die genannten Füllstoffe können hydro − phobiert sein, beispielsweise durch die Behandlung mit Organosilanen bzw. Organosiloxanen oder mit Stearinsäure oder durch Veretherung von Hydroxylgruppen zu Alkoxygruppen.

Um eine besonders gute Verklebung zu erzielen, werden vorzugsweise verstärkende Füllstoffe, und zwar in Mengen von 20 bis 50 Gewichts − %, bezogen auf das Gewicht der die Vinylgruppe enthaltenden Organopolysiloxane (a), verwendet.

Die Viskosität der erfindungsgemäß eingesetzten Organopolysiloxanmasse beträgt vorzugsweise $10^6$ bis $10^7$ mPa.s bei 25 °C.

Vorzugsweise werden die erfindungsgemäß verwendeten Massen als sogenannte Zweikomponenten − systeme eingesetzt, so daß das Si − gebundenen Wasserstoff aufweisende Organopolysiloxan (b) erst vor Gebrauch zu den übrigen Bestandteilen der erfindungsgemäß eingesetzten Massen zugegeben wird.

Vorzugsweise wird die Härtung der erfindungsgemäß verwendeten Massen bei Temperaturen von mindestens 100 °C und insbesondere bei 165 bis 180 °C durchgeführt, um innerhalb möglichst kurzer Zeit, nämlich 20 bis 60 Sekunden, bei Schichtdicken von 0,1 bis 1 mm eine möglichst gute Verklebung zu erzielen.

Durch die Kombination der zwei unterschiedlichen Vernetzungssysteme − Peroxide und Platinkataly − satoren − in den erfindungsgemäß eingesetzten Massen, die sich überraschenderweise gegenseitig nicht negativ beeinflussen, wird eine optimale Verklebung aller gängigen Silikonkautschukarten wie z.B. peroxi − disch vernetzter und additionsvernetzter HTV − Silikonkautschuk, additionsvernetzter RTV − Silikonkautschuk und additionsvernetzter HTV − Flüssigsilikonkautschuk miteinander erreicht. Dabei können Organopolysilo − xanelastomere gleicher Art als auch verschiedener Art miteinander verbunden werden. So läßt sich beispielsweise peroxidisch vernetzter HTV − Silikonkautschuk mit additionsvernetztem HTV − Silikonkaut − schuk verbinden. Bevorzugt werden die erfindungsgemäß eingesetzten Organopolysiloxanmassen zum Verbinden von mindestens zwei gleichartigen oder verschiedenartigen Organopolysiloxanelastomeren mit −

einander verwendet. Die erfindungsgemäß eingesetzten Organopolysiloxanmassen eignen sich nicht nur zum Verkleben von Preßteilen bzw. Extrudaten aus unterschiedlichen Silikonkautschukarten mit sich selbst sondern auch mit verschiedenen anorganischen und organischen Substraten. So können alle gängigen Organopolysiloxanelastomere mit verschiedenen gegebenenfalls grundierten Unterlagen wie z.B. Metall, Epoxyharz, Polyesterharz und Glasfaser verbunden werden, wobei es sich bei den Grundierungen um gängige Grundierungen für Silikonkautschuke handelt. Die Aushärtezeit des erfindungsgemäßen Klebstoffs beträgt nur wenige Sekunden und der erfindungsgemäße Klebstoff weist eine gute mechanische Festigkeit auf.

In den folgenden Beispielen beziehen sich alle Angaben von Teilen und Prozentsätzen auf das Gewicht, soweit nichts anderes angegeben ist.

Die in den folgenden Beispielen verwendete Mischung aus Platin – Vinylsiloxan – Komplex und Verdün – nungsmittel wurde hergestellt wie folgt:

Zu einer Mischung aus 10 Teilen $H_2PtCl_6 \cdot 6H_2O$, 20 Teilen 1,3 – Divinyl – 1,1,3,3 – tetramethyldisiloxan und 50 Teilen Ethanol wurden 20 Teile Natriumbicarbonat gegeben. Das Gemisch wurde 30 Minuten unter Rühren zum Sieden unter Rückfluß erwärmt, dann 15 Stunden stehen gelassen und danach filtriert. Aus dem Filtrat wurden bei etwa 16 hPa (abs.) die flüchtigen Bestandteile abdestilliert. Als Rückstand wurden 17 Teile einer Flüssigkeit erhalten, die in Benzol gelöst wurde. Die Lösung wurde filtriert und aus dem Filtrat das Benzol abdestilliert. Der Rückstand wurde mit Dimethylvinylsiloxaneinheiten als endständige Einheiten aufweisendem Dimethylpolysiloxan mit einer Viskosität von 1400 mPa.s bei 25˚C als Verdünnungsmittel in solcher Menge vermischt, daß die Mischung 1 Gewichts – % Platin, berechnet als Element, enthält.

Herstellung des in den folgenden Beispielen verwendeten peroxidisch vernetzten HTV – Silikonkaut – schuks:

100 Teile eines durch Trimethylsiloxygruppen endblockierten Diorganopolysiloxans aus 99,93 Mol – % Dimethylsiloxaneinheiten und 0,07 Mol – % Vinylmethylsiloxaneinheiten mit einer Viskosität von $8 \cdot 10^6$ mPa.s bei 25˚C werden in einem bei 150˚C betriebenen Kneter zunächst mit 50 Teilen pyrogen in der Gasphase erzeugtem Siliciumdioxid mit einer BET – Oberfläche von 200 $m^2/g$, dann mit 7 Teilen eines in den endständigen Einheiten je eine Si – gebundene Hydroxylgruppe aufweisenden Dimethylpolysiloxans mit einer Viskosität von 40 mPa.s bei 25˚C und schließlich nach Abkühlen der Mischung auf eine Temperatur von weniger als 60˚C mit 0,7 Teilen Dicumylperoxid vermischt. In einer Etagenpresse wird anschließend diese Mischung bei einer Temperatur von 170˚C während 10 Minuten zu 2 mm dicken Musterplatten für die Verklebungsversuche verpreßt.

Herstellung des in den folgenden Beispielen verwendeten additionsvernetzten HTV – Silikonkautschuks:

75 Teile eines durch Trimethylsiloxygruppen endblockierten Diorganopolysiloxans aus 99,7 Mol – % Dime – thylsiloxaneinheiten und 0,3 Mol – % Vinylmethylsiloxaneinheiten mit einer Viskosität von $8 \cdot 10^6$ mPa.s bei 25˚C sowie 25 Teile eines durch Trimethylsiloxygruppen endblockierten Diorganopolysiloxans aus 99,4 Mol – % Dimethylsiloxaneinheiten und 0,6 Mol – % Vinylmethylsiloxaneinheiten mit einer Viskosität von $8 \cdot 10^6$ mPa.s bei 25˚C werden in einem bei 150˚C betriebenen Kneter mit 45 Teilen pyrogen in der Gasphase erzeugtem Siliciumdioxid mit einer BET – Oberfläche von 300 $m^2/g$ und 7 Teilen eines in den endständigen Einheiten je eine Si – gebundene Hydroxylgruppe aufweisenden Dimethylpolysiloxans mit einer Viskosität von 40 mPa.s bei 25˚C vermischt und zwei Stunden lang geknetet. Nach Abkühlen der Mischung auf Raumtemperatur werden 5 Gewichts – ppm Platin in Form einer 1 – %igen Lösung von Hexachloroplatinsäure in Isopropanol und 0,2 Gewichts – ppm Benzotriazol, wobei sich die Gewichts – ppm jeweils auf das gesamte Gewicht der oben beschriebenen auf Raumtemperatur abgekühlten Mischung beziehen, zugemischt. Dann wird 1 Teil eines durch Trimethylsiloxygruppen endblockierten Methylhydro – genpolysiloxans mit einer Viskosität von 20 mPa.s bei 25˚C zu der Mischung zugegeben. Aus dieser Masse werden 2 mm dicke Platten, die als Musterplatten für die Verklebeversuche in den folgendenen Beispielen verwendet werden, hergestellt. Die Vulkanisation der Masse erfolgt durch 10 Minuten langes Erhitzen auf 150˚C.

**Beispiel 1**

100 Teile eines durch Vinyldimethylsiloxygruppen endblockierten Dimethylpolysiloxans mit 620 Dime – thylsiloxaneinheiten und einer Viskosität von 20 000 mPa.s bei 25˚C werden bei Raumtemperatur in einem Kneter zunächst mit 6 Teilen Hexamethyldisilazan und 3 Teilen Wasser vermischt. Zu der Mischung werden 35 Teile pyrogen in der Gasphase erzeugtes Siliciumdioxid mit einer BET – Oberfläche von 200 $m^2/g$ zugegeben und nach Homogenisierung des Gemisches wird das Gemisch zwei Stunden bei 150˚C unter Stickstoffzufuhr geknetet.

Nach Akühlung dieses Gemisches auf 50°C werden auf 100 Teile dieses Gemisches 2,5 Teile Dicumylperoxid zugemischt. Nach Abkühlung auf Raumtemperatur wird das Gemisch auf einem Dreiwalzenstuhl homogenisiert. In einem Rührwerk werden dann in das Gemisch 0,2 Teile der 1 Gewichts-% Platin, berechnet als Element, enthaltenden Mischung aus Platin-Vinylsiloxan-Komplex und Verdünnungsmittel und 0,07 Teile Ethinylcyclohexanol eingerührt.

Durch Zugabe von 1 Teil eines Dimethylhydrogensiloxaneinheiten als endständige Einheiten aufweisenden Diorganopolysiloxans aus Dimethylsiloxaneinheiten und Methylhydrogensiloxaneinheiten,worin 2 Methylhydrogensiloxaneinheiten je Dimethylsiloxaneinheit vorliegen, mit einer Viskosität von 75 mPa.s bei 25°C zu dem obigen Gemisch wird die Masse dann anwendungsfertig gemacht.

**Beispiel 2**

Aus der 2 mm dicken Platte des peroxidisch vernetzten HTV-Silkonkautschuks, dessen Herstellung oben beschrieben wurde, mit einer Reißfestigkeit von 8,5 N/mm$^2$, ermittelt nach DIN 53 505 mit Normstab S 3A, werden fünf Normstäbe S 3A ausgestanzt. Die Probekörper werden in der Mitte durchgeschnitten, die beiden Trennflächen mit der in Beispiel 1 beschriebenen anwendungsfertigen Masse dünn bestrichen, unter leichtem Druck wieder zusammengefügt und 30 Sekunden lang auf 170°C erhitzt. Die Werte für die Reißfestigkeit, ermittelt nach DIN 53 505, sind in Tabelle 1 angegeben.

Tabelle 1

| Probe | Reißfestigkeit N/mm$^2$ |
|-------|-------------------------|
| 1 | 8,0 |
| 2 | 7,8 |
| 3 | 8,1 |
| 4 | 8,3 |
| 5 | 7,8 |

Die Bruchstelle war bei allen fünf Proben jeweils die Klebestelle.

**Beispiel 3**

Aus der 2 mm dicken Platte des peroxidisch vernetzten HTV-Silkonkautschuks, dessen Herstellung oben beschrieben wurde, mit einer Reißfestigkeit von 8,5 N/mm$^2$, ermittelt nach DIN 53 505 an Normstab S 3A, und aus der 2 mm dicken Platte des additionsvernetzten HTV-Silikonkautschuks, dessen Herstellung oben beschrieben wurde, mit einer Reißfestigkeit von 9,0 N/mm$^2$, ermittelt nach DIN 53 505 an Normstab S 3A, werden jeweils fünf Normstäbe S 3A ausgestanzt. Die Probekörper werden jeweils in der Mitte durchgeschnitten und je eine Hälfte des Normstabs aus dem peroxidisch vernetzten HTV-Silikonkautschuk wird mit je einer Hälfte des Normstabs aus dem additonsvernetzten HTV-Silikonkautschuk verbunden. Dazu werden die beiden Trennflächen analog Beispiel 2 mit der anwendungsfertigen Masse, dessen Herstellung in Beispiel 1 beschrieben wurde, dünn bestrichen, die beiden Hälften unter leichtem Druck aneinandergefügt und 30 Sekunden lang auf 170°C erhitzt. Die Werte für die Reißfestigkeit, ermittelt nach DIN 53 505, sind in Tabelle 2 angegeben.

Tabelle 2

| Probe | Reißfestigkeit N/mm$^2$ |
|-------|-------------------------|
| 1 | 7,7 |
| 2 | 8,3 |
| 3 | 8,1 |
| 4 | 7,9 |
| 5 | 8,3 |

Der Bruch erfolgte bei den Proben 2 und 5 innerhalb des peroxidisch vernetzten HTV-Silikonkautschuks und bei den Proben 1, 3 und 4 in der Klebestelle.

**Vergleichsversuch**

a) Herstellung einer handelsüblichen bei Raumtemperatur an Luft härtenden Klebstoffmasse auf Grundlage von Organopolysiloxan:

75 Teile eines in den endständigen Einheiten je eine Si-gebundene Hydroxylgruppe aufweisenden Dimethylpolysiloxans mit einer Viskosität von 50 000 mPa.s bei 25°C werden mit 5 Teilen Hexamethyldisilazan und 2,5 Teilen Wasser sowie mit 20 Teilen pyrogen in der Gasphase erzeugtem Siliciumdioxid mit einer BET-Oberfläche von 150 m²/g in einem bei Raumtemperatur betriebenen Kneter homogenisiert. Anschließend wird die Mischung auf 120°C erwärmt und bei dieser Temperatur fünf Stunden lang geknetet. Dann wird bei 120°C und ca. 100 mbar das überschüssige Hexamethyldisilazan und Wasser abdestilliert. 94,98 Teile der so erhaltenen Mischung werden mit 5 Teilen Methyltriacetoxysilan und 0,05 Teilen Diacetoxybutylzinnacetat homogen vermischt. Die so erhaltene, durch Evakuieren von Gaseinschlüssen befreite Masse ist unter Ausschluß von Wasser lagerfähig und vernetzt bei Zutritt von Feuchtigkeit bei Raumtemperatur zu einem Elastomer.

b) Die Arbeitsweise von Beispiel 2 wird wiederholt mit der Abänderung, daß anstelle des Klebstoffs, dessen Herstellung in Beispiel 1 beschrieben wurde, der Klebstoff, dessen Herstellung oben unter a) beschrieben wurde, verwendet wird und der Klebstoff nicht bei 170°C, sondern bei Raumtemperatur gehärtet wird. Die Aushärtezeit beträgt dabei 24 Stunden. Die Ermittlung der Reißfestigkeit für die fünf Proben erfolgt, wie in Beispiel 2 beschrieben. Die Ergebnisse sind in Tabelle 3 angegeben.

Tabelle 3

| Probe | Reißfestigkeit N/mm² |
|-------|----------------------|
| 1 | 4,2 |
| 2 | 4,1 |
| 3 | 3,7 |
| 4 | 3,7 |
| 5 | 4,1 |

Der Bruch erfolgte bei allen fünf Proben jeweils an der Klebestelle.

**Patentansprüche**

1. Verwendung von zu Elastomeren härtbaren Organopolysiloxanmassen als Klebstoffe, dadurch gekennzeichnet, daß sie als wesentliche Bestandteile
   (a) Si-gebundene Vinylgruppen aufweisendes Organopolysiloxan
   (b) Si-gebundenen Wasserstoff aufweisendes Organopolysiloxan
   (c) die Anlagerung von Si-gebundenem Wasserstoff an Vinylgruppen förderndem Platinkatalysator
   (d) Inhibitor, der die Anlagerung von Si-gebundenem Wasserstoff an Vinylgruppen bei Raumtemperatur verzögert, mit der Maßgabe, daß Inhibitoren mit einem Hydroperoxy-Rest ausgeschlossen sind, und
   (e) organisches Peroxid mit der Maßgabe, daß Acylperoxide ausgeschlossen sind.
   enthalten.

2. Verwendung von Organopolysiloxanmassen nach Anspruch 1, dadurch gekennzeichnet, daß als Inhibitor (d) Ethinylcyclohexanol eingesetzt wird.

3. Verwendung von Organopolysiloxanmassen nach Anspruch 1 oder 2, dadurch gekennzeichnet, daß als organisches Peroxid (e) Dicumylperoxid oder 2,5-Dimethyl-2,5-di(tert.-butylperoxy)hexan eingesetzt wird.

4. Verwendung von Organopolysiloxanmassen nach einem der Ansprüche 1 bis 3 als Klebstoffe zum Verbinden von mindestens zwei gleichartigen oder verschiedenartigen Organopolysiloxanelastomeren miteinander.

5. Verwendung von Organopolysiloxanmassen nach einem der Ansprüche 1 bis 3 als Klebstoffe zum Verbinden von Organopolysiloxanelastomeren mit gegebenfalls grundierten Unterlagen.

**Claims**

1. Use as adhesives of an organopolysiloxane composition which can be cured to form an elastomer, which composition contains, as essential components,
    (a) an organopolysiloxane containing Si − bound vinyl groups,
    (b) an organopolysiloxane containing Si − bound hydrogen,
    (c) a platinum catalyst which promotes the addition reaction of Si − bound hydrogen with vinyl groups,
    (d) an inhibitor which delays the addition reaction of Si − bound hydrogen with vinyl groups at room temperature, with the proviso that inhibitors containing a hydroperoxy radical are excluded, and
    (e) an organic peroxide, with the proviso that acyl peroxides are excluded.

2. Use of an organopolysiloxane composition according to Claim 1, characterised in that the inhibitor (d) employed is ethynylcyclohexanol.

3. Use of an organopolysiloxane composition according to Claim 1 or 2, characterised in that the organic peroxide (e) employed is dicumyl peroxide or 2,5 − dimethyl − 2,5 − di(tert. − butylperoxy)hexane.

4. Use of an organopolysiloxane composition according to any one of Claims 1 to 3 as an adhesive for bonding at least two similar or different organopolysiloxane elastomers to one another.

5. Use of an organopolysiloxane composition according to any one of Claims 1 to 3 as an adhesive for bonding organopolysiloxane elastomers to optionally primed substrates.

**Revendications**

1. Utilisation en tant qu'adhésifs de compositions de polyorganosiloxane pouvant durcir pour donner des élastomères, caractérisée en ce qu'ils contiennent en tant que constituants principaux :
    (a) un polyorganosiloxane comportant des groupes vinyle liés à Si,
    (b) un polyorganosiloxane comportant des atomes d'hydrogène liés à Si,
    (c) un catalyseur au platine, qui favorise la fixation, aux groupes vinyle, des atomes d'hydrogène liés à Si,
    (d) un inhibiteur qui ralentit à la température ambiante la fixation, sur les groupes vinyle, des atomes d'hydrogène liés à Si, du moment que sont exclus les inhibiteurs comportant un radical hydrope − roxy, et
    (e) un peroxyde organique, du moment qu'il ne s'agit pas d'un peroxyde d'acyle.

2. Utilisation de compositions de polyorganosiloxane selon la revendication 1, caractérisée en ce qu'on utilise comme inhibiteur (d) de l'éthynylcyclohexanol.

3. Utilisation de compositions de polyorganosiloxane selon la revendication 1 ou 2, caractérisée en ce qu'on utilise comme peroxyde organique (e) du peroxyde de dicumyle ou du diméthyl − 2,5 di − tert − butylperoxy − 2,5 hexane.

4. Utilisation de compositions de polyorganosiloxane selon l'une des revendications 1 à 3 en tant qu'adhésifs pour assembler les uns aux autres au moins deux élastomères de polyorganosiloxane identiques ou différents.

5. Utilisation de compositions de polyorganosiloxane selon l'une des revendications 1 à 3 en tant qu'adhésifs pour assembler des élastomères de polyorganosiloxane à des supports ayant éventuelle − ment reçu une couche de fond.